# EUROPEAN PATENT APPLICATION

(11) **EP 4 119 631 A1**
(43) Date of publication of application: **18.01.2023**
(21) Application number: 21767101.5
(22) Date of filing: 10.03.2021
(51) Int. Cl.: C09J 161/12, B60C 1/00, C09J 11/06, C09J 121/02, C09J 197/00, D06M 13/395, D06M 15/41, D06M 15/687, D06M 15/693

(54) **ADHESIVE COMPOSITION, RUBBER-ORGANIC FIBER CORD COMPOSITE, AND TIRE**

(30) Priority: 11.03.2020 JP 2020042319
(71) Applicant: BRIDGESTONE CORPORATION, Chuo-ku Tokyo 104-8340 (JP)
(72) Inventor: TAKAHASHI Yuka, Tokyo 104-8340 (JP)
(74) Representative: Marks & Clerk LLP
(86) International application number: PCT/JP2021/009653
(87) International publication number: WO 2021/182542

(57) **Abstract**

An object of the present disclosure is to provide an adhesive composition capable of achieving excellent adhesion even when resorcin is not included therein. Another object of the present disclosure is to provide a rubber-organic fiber cord composite and a tire, which make a low impact on the environment and are excellent in productivity and adhesion between rubber and organic fiber cords. To achieve the objects, the present disclosure provides an adhesive composition essentially comprising therein: a polyphenol; and formaldehyde.

## Description

### TECHNICAL FIELD

The present invention relates to an adhesive composition, a rubber-organic fiber cord composite, and a tire.

The compounds disclosed in the following description may be partially or completely derived from fossil resources, biological resources such as plant resources, or recyclable resources such as end-of-life tires. They may also be derived from mixtures of two or more of fossil resources, biological resources and recyclable resources.

### BACKGROUND ART

Organic fibers such as polyester fibers have conventionally been used as a reinforcing material of a rubber article including a tire, a belt, an air spring, a rubber hose, and the like, in a form of a filament, a cord, a cable, a cord textile, a canvas, or the like, due to the high initial elastic modulus and the excellent high temperature dimensional stability thereof. In this connection, various types of adhesive compositions have been proposed for improving adhesion between such organic fibers as described above and rubber. For example, there is a known technique for ensuring good adhesion between an organic fiber and rubber by using as the adhesive composition described above an RFL (resorcin-formalin-latex) adhesive containing resorcin, formalin, rubber latex, etc., and thermally curing the RFL adhesive (PTLs 1-3).

Further, there are other known techniques for the relevant adhesive compositions in the prior art, which techniques aim at improving adhesion between an organic fiber and rubber by using a resorcin-formalin resin obtained by initial condensation of resorcin and formalin (PTLs 4, 5) or pretreating a tire cord made of polyester fibers or the like by an epoxy resin.

However, in this respect, there has been a demand for reducing an amount to be used of resorcin generally employed in the adhesive compositions described above, in terms of environmental protection. In view of this, several adhesive compositions and bonding methods using the adhesive compositions, wherein none of the adhesive compositions contains resorcinol in consideration of better environmental protection, have been proposed (PTL 6).

### CITATION LIST

### Patent Literature

PTL 1: JP58-002370 A(1983)
PTL 2: JP60-092371 A(1985)
PTL 3: JP60-096674 A(1985)
PTL 4: JP63-249784 A(1988)
PTL 5: JP63-061433 B(1988)
PTL 6: JP2010-255153 A

### SUMMARY OF THE INVENTION

### (Technical Problem)

However, an adhesive composition not containing resorcin is slow to cure and thus needs further improvement in terms of productivity and adhesion property thereof.

In view of this, an object of the present disclosure is to solve the prior art problems described above and provide an adhesive composition capable of achieving excellent adhesion even when resorcin is not included therein.

Further, another object of the present disclosure is to provide a rubber-organic fiber cord composite and a tire, which make a low impact on the environment and are excellent in productivity and adhesion between rubber and organic fiber cords.

### (Solution to Problem)

The primary features of the present disclosure for achieving the aforementioned objects are as follows.

An adhesive composition of the present disclosure characteristically contains a polyphenol and formaldehyde therein.

The adhesive composition of the present disclosure can achieve excellent adhesion even when resorcin is not included therein.

In a preferable example of the adhesive composition of the present disclosure, the polyphenol has at least three hydroxyl groups. The adhesive composition can achieve more excellent adhesion than otherwise in this case.

In another preferable example of the adhesive composition of the present disclosure, the polyphenol is at least one selected from the group consisting of phloroglucinol, morin, phloroglucide, lignin, and tannin. The adhesive composition can achieve more excellent adhesion than otherwise in this case.

It is preferable that the adhesive composition of the present disclosure further contains an isocyanate compound. The adhesive composition can achieve more excellent adhesion than otherwise in this case.

In the present disclosure, the isocyanate compound is preferably an (blocked) isocyanate group-including aromatic compound. The adhesive composition can achieve more excellent adhesion than otherwise in this case.

It is preferable that the adhesive composition of the present disclosure further contains rubber latex. The adhesive composition can achieve more excellent adhesion than otherwise in this case.

In the present disclosure, the rubber latex preferably includes at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). The adhesive composition can achieve even more excellent adhesion than otherwise in this case.

It is preferable that the total content of the polyphenol and the formaldehyde is in the range of 5 to 65 mass % in terms of solid content mass ratio, the content of the latex is in the range of 30 to 95 mass % in terms of solid content mass ratio, and a content of other components is in the range of 0 to 65 mass %, respectively, in the adhesive composition. The adhesive composition can achieve even more excellent adhesion than otherwise in this case.

The adhesive composition of the present disclosure is preferable as an adhesive composition for an organic fiber cord because the adhesive composition can significantly improve adhesion between the organic fiber cord and rubber.

Further, a rubber-organic fiber cord composite of the present disclosure has a rubber member and an organic fiber cord, wherein at least a portion of the organic fiber cord is coated with the adhesive composition described above.

The rubber-organic fiber cord composite of the present disclosure is excellent in adhesion between the rubber member and the organic fiber cord.

Yet further, a tire of the present disclosure characteristically includes the rubber-organic fiber cord composite described above. The tire of the present disclosure is excellent in adhesion between rubber and an organic fiber cord.

### (Advantageous Effect)

According to the present disclosure, it is possible to provide an adhesive composition capable of achieving excellent adhesion even when resorcin is not included therein.

Further, according to the present disclosure, it is possible to provide a rubber-organic fiber cord composite and a tire, which make a low impact on the environment and are excellent in productivity and adhesion between rubber and organic fiber cords.

### DETAILED DESCRIPTION

Hereinafter, an adhesive composition, a rubber-organic fiber cord composite, and a tire of the present disclosure will be demonstratively described in detail based on embodiments thereof.

### < Adhesive composition >

An adhesive composition of the present disclosure characteristically contains a polyphenol and formaldehyde therein.

The adhesive composition of the present disclosure, not containing resorcin therein, can reduce an impact thereof on the environment. Further, a polyphenol which is used in place of resorcin forms polyphenol-formaldehyde resin in collaboration with formaldehyde, so that the resin causes an adhesion effect equivalent to that of resorcin-formaldehyde resin. That is, it is possible to satisfactorily improve adhesion between an organic fiber cord and rubber by treating an organic fiber cord with an adhesive composition containing a polyphenol and formaldehyde.

Accordingly, the adhesive composition of the present disclosure can achieve excellent adhesion even though it does not contain resorcin therein. The adhesive composition of the present disclosure is preferable as an adhesive composition for an organic fiber cord.

### (Polyphenol)

The adhesive composition described above contains a polyphenol as a resin component therein. The adhesive composition can enhance adhesiveness thereof by containing a polyphenol therein.

Type of the polyphenol is not particularly restricted as long as the polyphenol is a water-soluble polyphenol other than resorcin (resorcinol). The numbers of aromatic ring(s) and hydroxyl groups may be appropriately selected, as well.

The polyphenol has preferably at least two hydroxyl groups and more preferably at least three hydroxyl groups in terms of achieving more excellent adhesion than otherwise. In a case where the polyphenol has three or more hydroxyl groups, the polyphenol or a condensate thereof more thoroughly dissolves in the adhesive composition as an aqueous solution and thus is more uniformly distributed in the adhesive composition, thereby allowing the adhesive composition to realize even better adhesion property.

In this respect, in a case where the polyphenol includes a plurality of (i.e., two or more) aromatic rings therein, each aromatic ring has the two or three hydroxyl groups in ortho, meta and/or para positions thereof.

Examples of the polyphenol having three or more hydroxyl groups described above include: phloroglucinol represented by the structural formula (1) shown below; morin (that is, 2',4',3,5,7-pentahydroxy flavone) represented by the structural formula (2) shown below; phloroglucide (that is, [1,1'-biphenyl]-2,4,6,3',5'-pentol) represented by the structural formula (3) shown below; lignin and tannin obtained from various plants; and the like.

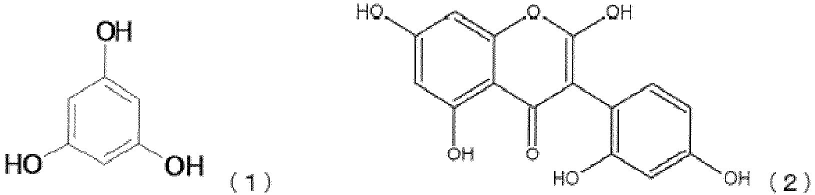

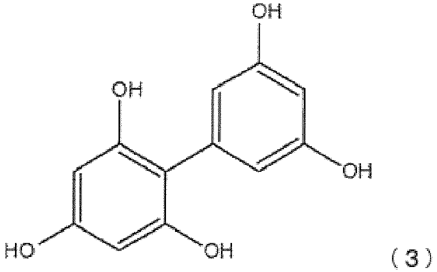

The lignin and tannin are obtained from plants. Type of the plant from which the lignin/tannin is derived is not particularly restricted. Further, the lignin and tannin may be either natural products or those obtained by subjecting the natural products to various chemical treatments.

Examples of the lignin include lignin (dealkaline), lignin (alkaline), sodium ligninsulfonate, and the like. Examples of the tannin include plant tannin derived from mimosa, plant tannin derived from Quebracho, and the like.

Either a single type or combination of two or more types of these examples may be used as the polyphenol.

It is desirable that a content of the polyphenol in the adhesive composition is appropriately adjusted such that a solid content mass ratio of the polyphenol with respect to formaldehyde described below is within the preferable range.

### (Formaldehyde)

The adhesive composition of the present disclosure contains, in addition to the polyphenol described above, formaldehyde as a resin component. The formaldehyde contained in the adhesive composition realizes, in collaboration with the polyphenol described above, superior adhesion property of the adhesive composition.

The polyphenol and the formaldehyde exist as a condensate thereof in the adhesive composition. A mass ratio of the formaldehyde with respect to the polyphenol (a content of the formaldehyde/a content of the polyphenol) is preferably ≥ 0.1 and ≤ 3 and more preferably ≥ 0.15 and ≤ 2.5. When a condensation reaction occurs between the polyphenol and the formaldehyde, a resin as the reaction product has more preferable hardness and adhesion property in a case where the aforementioned mass ratio is within the preferable range than otherwise.

The total content of the polyphenol and the formaldehyde in the adhesive composition is preferably in the range of 5 to 65 mass %, more preferably in the range of 5 to 50 mass %, and even more preferably in the range of 5 to 40 mass %. The adhesive composition can achieve more excellent adhesion, than otherwise, without deteriorating workability or the like when the total content of the polyphenol and the formaldehyde in the adhesive composition is within the preferable ranges described above.

It should be noted that the mass ratio and the total content of the polyphenol and the formaldehyde described above represent a mass ratio and a relative mass value in a dry state, i.e., solid content mass ratios, respectively.

### (Isocyanate compound)

The adhesive composition of the present disclosure preferably further contains an isocyanate compound in addition to the polyphenol and the formaldehyde described above. In a case where the adhesive composition contains an isocyanate compound, an adhesion property of the adhesive composition is significantly improved due to a synergistic effect caused by the isocyanate compound, the polyphenol, and the formaldehyde.

In the present disclosure, the isocyanate compound represents a compound i) capable of causing an effect of facilitating adhesion of the adhesive composition to a resin material (e.g., an organic fiber cord) as a target to adhere to and ii) having an isocyanate group as a polar functional group.

The isocyanate compound, of which type is not particularly restricted, is preferably an (blocked) isocyanate group-including aromatic compound in terms of further improving adhesion. In a case where the adhesive composition contains an isocyanate compound, the (blocked) isocyanate group-including aromatic compound is distributed in the vicinity of an interface between the adhesive composition and the fiber to which the adhesive composition is to adhere and effectively facilitates adhesion between the adhesive composition and the fiber. That is, adhesion between the adhesive composition and the organic fiber cord can be further improved by an adhesion-facilitating effect caused by the (blocked) isocyanate group-including aromatic compound.

The (blocked) isocyanate group-including aromatic compound described above represents an aromatic compound having an (blocked) isocyanate group therein. An "(blocked) isocyanate group" represents a blocked isocyanate group or an isocyanate group. Specifically, an "(blocked) isocyanate group" may represent (other than an isocyanate group) a blocked isocyanate group resulted from a reaction between an isocyanate group and a blocking agent for blocking the isocyanate group, an isocyanate group which has not reacted with the blocking agent, an isocyanate group appearing as a result of dissociation of the blocking agent from the blocked isocyanate group, or the like.

The (blocked) isocyanate group-including aromatic compound described above preferably has a molecular structure in which aromantic compounds are bonded to each other by an alkylene bond (chain) and more preferably has a molecular structure in which aromantic compounds are bonded to each other by a methylene bond. Examples of the molecular structure in which aromantic compounds are bonded to each other by an alkylene bond (chain) include molecular structures observed in diphenylmethane diisocyanate, polymethylene polyphenyl polyisocyanate, a condensate of a phenol and formaldehyde, and the like.

Examples of the aromatic compound having an (blocked) isocyanate group include: a compound having an aromatic polyisocyanate and a thermally dissociable blocking agent therein; a water-dispersible compound having therein a component obtained by blocking diphenylmethane diisocyanate or an aromatic polyisocyanate with a thermally dissociable blocking agent; an aqueous urethane compound; and the like.

Preferable examples of the compound having an aromatic polyisocyanate and a thermally dissociable blocking agent therein include a blocked isocyanate compound having diphenylmethane diisocyanate and a conventionally known isocyanate-blocking agent therein, and the like. Examples of the water-dispersible compound having therein a component obtained by blocking diphenylmethane diisocyanate or an aromatic polyisocyanate with a thermally dissociable blocking agent include a reaction product obtained by blocking diphenylmethane diisocyanate or polymethylene polyphenyl polyisocyanate with a conventionally known blocking agent for blocking an isocyanate group. Specifically, a commercially available blocked polyisocyanate compound such as "ELASTRON BN69" manufactured by DKS Co., Ltd., "ELASTRON BN77" manufactured by DKS Co., Ltd., "MEIKANATE TP-10" manufactured by MEISEI CHEMICAL WORKS, LTD., and the like can be employed.

The aqueous urethane compound is obtained by causing following three components (α), (β) and (γ) to react with each other: an organic polyisocyanate compound (α) having a molecular structure in which aromantic compounds are bonded to each other by an alkylene bond (chain), preferably a molecular structure in which aromantic compounds are bonded to each other by a methylene bond; a compound (β) having a plurality of active hydrogens; and a thermally dissociable blocking agent (γ) for blocking an isocyanate group. The aqueous urethane compound as described above, having a flexible molecular structure, not only functions as an adhesion improver but also suppresses softening/fluidization of the adhesive at high temperature as a flexible (solid-phase) crosslinking agent.

In the present disclosure, the term "aqueous" represents a water-soluble or water dispersible state. Further, the term "water-soluble" does not necessarily represent full/complete solubility in water but may represent a partially water-soluble state or a state in which phase separation does not occur in an aqueous solution of the adhesive composition of the present disclosure.

In the present disclosure, preferable examples of the aqueous urethane compound include an aqueous urethane compound represented by general formula (4) shown below.

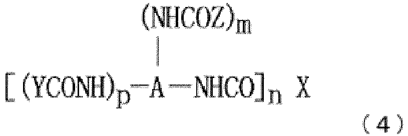

In general formula (4), "A" represents a residue resulting from dissociation of active hydrogen from an organic polyisocyanate compound (α) having a molecular structure in which aromantic compounds are bonded to each other by an alkylene bond or chain; "Y" represents a residue resulting from dissociation of active hydrogen from a thermally dissociable blocking agent (γ) for blocking an isocyanate group; "Z" represents a residue resulting from dissociation of active hydrogen from a compound (δ); "X" represents a residue resulting from dissociation of active hydrogen from a compound (β) having a plurality of active hydrogens; "n" represents an integer in the range of 2 to 4; and "p + m" represents an integer in the range of 2 to 4 (m ≥ 0.25).

Examples of the organic polyisocyanate compound (α) having a molecular structure in which aromantic compounds are bonded to each other by an alkylene bond or chain include methylenediphenyl polyisocyanate, polymethylenepolyphenyl polyisocyanate, and the like.

The compound (β) having a plurality of active hydrogens is preferably a compound having 2 to 4 active hydrogen atoms and the average molecular weight of ≤ 5,000. Examples of the compound (β) as described above include (i) a polyhydric alcohol having 2 to 4 hydroxyl groups, (ii) a polyamine having 2 to 4 primary and/or secondary amino groups, (iii) an aminoalcohol having 2 to 4 primary and/or secondary amino groups and hydroxyl group(s), (iv) a polyester polyol having 2 to 4 hydroxyl groups, (v) a polybutadiene polyol having 2 to 4 hydroxyl groups, and a copolymer of the polybutadiene polyol and another vinyl monomer, (vi) a polychloroprene polyol having 2 to 4 hydroxyl groups, and a copolymer of the polychloroprene polyol and another vinyl monomer, and (vii) a polyether polyol having 2 to 4 hydroxyl groups, obtained, for example, by: a polyaddition reaction of C₂₋₄ alkylene oxides to a polyamine, a polyhydric phenol, an aminoalcohol as the polymerization initiator; a polyaddition reaction of C₂₋₄ alkylene oxides to a C_{≥3} polyhydric alcohol as the polymerization initiator; copolymerization of C₂₋₄ alkylene oxides; and polymerization of C₃₋₄ alkylene oxides.

The thermally dissociable blocking agent (γ) for blocking an isocyanate group described above is a compound capable of releasing isocyanate group when it is subjected to a heat treatment. Examples of the thermally dissociable blocking agent (γ) include the conventionally known isocyanate-blocking agents.

The compound (δ) described above is a compound having at least one active hydrogen atom, as well as an anionic hydrophilic group and/or a nonionic hydrophilic group. Examples of the compound having at least one active hydrogen atom, as well as an anionic hydrophilic group, include: aminosulfonic acid such as taurine, N-methyltaurine, N-butyltaurine, sulfanilic acid; aminocarboxylic acid such as glycine, alanine; and the like. Examples of the compound having at least one active hydrogen atom, as well as a nonionic hydrophilic group, include a compound having a hydrophilic polyether chain.

A content of the isocyanate compound in the adhesive composition, which is not particularly restricted, is preferably in the range of 5 to 65 mass % and more preferably in the range of 10 to 45 mass % in terms of more reliably ensuring superior adhesion than otherwise.

It should be noted that the aforementioned content of the isocyanate compound represents a relative mass value (a solid content mass ratio) thereof in a dry state.

### (Rubber latex)

The adhesive composition of the present disclosure may substantially further contain rubber latex in addition to the polyphenol, the formaldehyde, and the isocyanate compound described above. The adhesive composition can further improve the adhesion property thereof with respect to a rubber member by containing rubber latex therein.

The rubber latex is obtained by dispersing fine particles of a rubber component into water or the like. A concentration of the rubber component in the rubber latex is preferably in the range of 10 to 60 mass % and more preferably in the range of 20 to 50 mass %.

Type of the rubber component of the rubber latex is not particularly restricted and examples of the rubber component which can be used include: natural rubber (NR); synthetic rubber such as isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene rubber (NBR), vinylpyridine-styrene-butadiene copolymer rubber (Vp); and the like. Either a single type or combination of two or more types as a blend, of these examples, may be used as the rubber component.

The rubber latex is preferably mixed with the polyphenol and the formaldehyde prior to the isocyanate compound is blended therewith.

Further, a content of the rubber latex in the adhesive composition in terms of the solid content (i.e., the rubber component) mass ratio is preferably in the range of 30 to 95 mass %, more preferably in the range of 40 to 90 mass %, and even more preferably in the range of 50 to 85 mass %.

It is preferable that the total content of the polyphenol and the formaldehyde is in the range of 5 to 65 mass % in terms of solid content mass ratio, the content of the latex is in the range of 30 to 95 mass % in terms of solid content mass ratio, and a content of other components is in the range of 0 to 65 mass %, respectively, in the adhesive composition. The adhesive composition can achieve even more excellent adhesion than otherwise in this case.

### (Method for manufacturing adhesive composition)

Examples of a method for manufacturing the adhesive composition, of which type is not particularly restricted, include: a method including mixing raw materials such as a polyphenol, formaldehyde, and rubber latex described above and aging them; a method including at first mixing the polyphenol and the formaldehyde, aging the mixture, adding the rubber latex to the mixture thus aged, and aging the mixture containing the three components; and the like. In a case where the adhesive composition is to further contain the isocyanate compound, the isocyanate compound can be added after adding the rubber latex and aging the mixture containing the three components (the polyphenol, the formaldehyde, and the rubber latex).

It is preferable that the polyphenol and the formaldehyde are dissolved in water and employed as an aqueous solution thereof. In this respect, water may be heated to preferably 40 °C or higher, more preferably 60 °C or higher, when the polyphenol does not smoothly dissolve in the water. Alternatively, it is also preferable to make water alkaline by adding an aqueous solution of sodium hydroxide, an aqueous solution of ammonia, or the like to the water, to facilitate dissolution of the polyphenol.

### < Rubber-organic fiber cord composite >

A rubber-organic fiber cord composite of the present disclosure has a rubber member and an organic fiber cord, wherein at least a portion of the organic fiber cord is coated with the adhesive composition described above. The rubber-organic fiber cord composite of the present disclosure is excellent in adhesion between the rubber and the organic fiber cord. Further, the rubber-organic fiber cord composite of the present disclosure, using the adhesive composition described above, has a relatively low impact on the environment.

Regarding the rubber-organic fiber cord composite, although it suffices to coat at least a portion of the organic fiber cord with the adhesive composition as described above, it is preferable to coat the entire surface of the organic fiber cord with the adhesive composition in terms of further improving adhesion between the rubber and the organic fiber cord.

A method for coating at least a portion of the organic fiber cord with the adhesive composition described above is not particularly restricted and examples thereof include immersion, painting, spray coating, and the like. In a case where the adhesive composition contains a solvent, the solvent can be removed by a drying treatment after coating.

Type of a material of the organic fiber cord is not particularly restricted and may be appropriately selected according to applications. Specific examples of the organic fiber cord in terms of material thereof include: a fiber cord made of polyester such as polyethylene terephthalate (PET); a fiber cord made of aliphatic polyamide such as 6-nylon, 6,6-nylon, 4,6-nylon; a fiber cord made of polyketone; a fiber cord made of aromatic polyamide such as poly(p-phenylene terephthalamide); and a cellulose-based fiber cord such as rayon.

A configuration of the organic fiber cord is not particularly restricted and a monofilament and/or an organic fiber cord obtained by twisting a plurality of single fiber filaments can be used. In this connection, the average diameter of the single fiber filament is preferably ≥ 2 µm, more preferably ≥ 15 µm, and preferably ≤ 50 µm, in terms of ensuring a satisfactorily good reinforcing effect on a rubber article by the organic fiber cord. The organic fiber cord may have an interwoven configuration.

The organic fiber cord of the rubber-organic fiber cord composite of the present disclosure may be subjected to, prior to being coated with the adhesive composition, a pretreatment with a solution containing an isocyanate compound and/or an epoxy compound.

In this respect, a processing form in which the organic fiber cord is directly treated with the adhesive composition without being subjected to the pretreatment is occasionally referred to as "single bath treatment" and a processing form in which the organic fiber cord is treated with the adhesive composition after being subjected to the pretreatment is occasionally referred to as "dual bath treatment".

In the present disclosure, the isocyanate compound which may be contained in the adhesive composition, as described above, is also applicable as an isocyanate compound for use in a solution for the pretreatment. The isocyanate compound causes an effect of facilitating adhesion of the adhesive composition to the organic fiber cord as a target to adhere to.

A content of the isocyanate compound in a solution for the pretreatment, which is not particularly restricted, is preferably in the range of ≥ 5 mass % and ≤ 95 mass %, more preferably in the range of ≥ 15 mass % and ≤ 85 mass %, and even more preferably in the range of ≥ 15 mass % and ≤ 70 mass %, in solid content mass ratio. When the content of the isocyanate compound in the pretreatment solution is ≥ 5 mass %, strength and chemical resistance of an adhesive layer formed by the adhesive composition, as well as adhesion-tightness and adhesiveness with respect to the organic fiber cord, improve. When the content of the isocyanate compound in the pretreatment solution is ≤ 95 mass %, the adhesive layer can retain satisfactorily high resistance to cohesive failure at high temperature, whereby satisfactorily good adhesiveness of the adhesive layer at high temperature is ensured.

Various types of compounds, each of which has at least one epoxy group per molecule, can be employed as the epoxy compound for use in a solution for the pretreatment described above. The epoxy compound functions as a crosslinking agent in the adhesive composition and exhibits good adhesion, heat resistance, durability, strength, flexibility, electric insulation properties, and the like.

The epoxy compound, of which type is not particularly restricted, is preferably a compound having two or more epoxy groups per molecule and more preferably a compound having four or more epoxy groups per molecule thereof. An epoxy compound having two or more epoxy groups per molecule thereof can effectively function as a crosslinking agent due to the two or more epoxy groups, and an epoxy compound having four or more epoxy groups per molecule thereof can perform crosslinking more densely and achieve higher flexibility than otherwise.

The epoxy compound, of which type is not particularly restricted, preferably has 10 or less epoxy groups per molecule thereof. The crosslinking density will not be too high and a resulting crosslinked product will have satisfactory toughness in this case.

Specific examples of the epoxy compound include a product obtained by a reaction between a polyhydric alcohol and epichlorohydrin, such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythrithiol polyglycidyl ether, diglycerol polyglycidyl ether, sorbitol polyglycidyl ether, or the like. It is possible to further improve adhesion between an organic fiber cord and rubber by using any of the aforementioned compounds as the epoxy compound.

A content of the epoxy compound in a solution for the pretreatment described above, which is not particularly restricted, is preferably in the range of ≥ 5 mass % and ≤ 95 mass %, more preferably in the range of ≥ 15 mass % and ≤ 85 mass %, and even more preferably in the range of ≥ 15 mass % and ≤ 50 mass %, in solid content mass ratio. When the content of the epoxy compound in the pretreatment solution is ≥ 5 mass %, crosslinking is vigorously performed by the epoxy resin in an adhesive layer formed by the adhesive composition, whereby the adhesive layer can further improve resistance to cohesive failure at high temperature and adhesiveness thereof and also have higher flexibility than otherwise. When the content of the epoxy compound in the pretreatment solution is ≤ 95 mass %, the adhesive layer can have satisfactorily vigorous crosslinking formation by the epoxy resin and exhibits higher toughness than otherwise.

A variety of rubber compositions (raw materials) containing at least a rubber component can be used for a rubber member of the rubber-organic fiber cord composite of the present disclosure. The rubber member, of the rubber-organic fiber cord composite, is preferably formed from a vulcanized rubber obtained by vulcanizing any of the variety of rubber compositions described above. Each of the rubber compositions can be manufactured by, for example, blending a rubber component composed of natural rubber and/or synthetic rubber (e.g., butadiene rubber, styrene-butadiene rubber, isoprene rubber, or the like) with a filler such as carbon black, silica; a crosslinking agent such as sulfur, peroxide; a crosslinking accelerator; and the like and then subjecting the blend to mixing and kneading, warming, extrusion, and the like.

The rubber-organic fiber cord composite of the present disclosure can be manufactured, for example, by: coating at least a portion of the organic fiber cord with the adhesive composition described above; covering the organic fiber cord thus coated with the adhesive composition, with a rubber composition in the unvulcanized state as a raw material of the rubber member described above, thereby preparing a unvulcanized rubber-organic fiber cord composite; and subjecting the unvulcanized rubber-organic fiber cord composite to vulcanization.

### < Tire >

A tire of the present disclosure characteristically includes the rubber-organic fiber cord composite described above. The tire of the present disclosure is excellent in adhesion between rubber and an organic fiber cord. Further, the tire, using the rubber-organic fiber cord composite treated with the adhesive composition described above, has a relatively low impact on the environment.

The rubber-organic fiber cord composite described above is applicable to, for example, a carcass, a belt, a belt-reinforcing layer, and a belt periphery-reinforcing layer such as a flipper strip in the tire of the present disclosure.

The tire of the present disclosure may be obtained by either i) molding a green tire by using an unvulcanized rubber composition and then subjecting the green tire to vulcanization or ii) molding a green tire by using a semi-vulcanized rubber prepared by a preliminary vulcanization process and then subjecting the green tire to main vulcanization, depending on the type of the intended tire. It suffices to employ the organic fiber cord treated with the adhesive composition described above in at least a portion of the tire of the present disclosure. In other words, any appropriate conventionally known members may be used for other structural members of the tire, with no particular restrictions thereto.

The tire of the present disclosure is preferably a pneumatic tire. Examples of gas with which the tire is to be inflated include inert gas such as nitrogen, argon, helium or the like, as well as ambient air and air of which oxygen partial pressure has been adjusted.

### EXAMPLES

The present disclosure will be described further in detail by Examples hereinafter. The present disclosure is not limited by any means to these Examples.

### < Preparation of adhesive composition >

Samples of the adhesive composition were prepared according to the blend formulation shown in Table 1.

Specifically, each of the adhesive composition samples of Examples was prepared by:
adding an aqueous solution of sodium hydroxide (IN), the polyphenol, and formalin (a solution obtained by diluting "purity 37 % formaldehyde aqueous solution" manufactured by KANTO CHEMICAL CO., INC. to 10 times its volume) to water according to the relevant blend formulation of the adhesive composition sample, with optionally adding aqueous ammonia, as well, according to necessity;
dissolving the added components and stirring the mixture for 2.5 hours at 25 °C, thereby obtaining a solution containing a polyphenol-formaldehyde resin; and
adding latex of vinylpyridine-styrene-butadiene copolymer rubber, according to the relevant blend formulation, to the polyphenol-formaldehyde resin-containing solution thus obtained and aging the mixture for 24 hours at 27 °C, thereby obtaining an adhesive composition sample.

The detailed information of the respective components used for preparation of the samples are shown in Table 2.

Adhesion property was evaluated for each of the adhesive composition samples thus prepared, by the following Method 1/Method 2.

### < Method 1 for evaluating adhesion property ("single bath treatment" cases: Examples 1 to 7) >

Adhesion property of the adhesive composition sample was evaluated by:
preparing a (green) rubber-organic fiber cord composite by treating a 66 nylon cord for a tire (66 Ny, cord structure: 1400 dtex/2/3) with the adhesive composition sample and then embedding the 66 nylon cord in an unvulcanized rubber composition containing a rubber component including natural rubber and styrene-butadiene copolymer, carbon black, and a crosslinking agent;
vulcanizing the green rubber-organic fiber cord composite under the pressure of 20 kgf/cm² at 160 °C for 20 minutes, thereby obtaining a vulcanized rubber-organic fiber cord composite;
cooling the vulcanized rubber-organic fiber cord composite thus obtained, to the room temperature, and digging up the nylon cord from the vulcanized rubber-organic fiber cord composite;
measuring resistance force or adhesiveness (N/cord) experienced in peeling the nylon cord from the vulcanized rubber-organic fiber cord composite at the speed of 30 cm/minute at the room temperature (25 ± 1 °C); and
visually observing the state in which the rubber was attached to the nylon cord. The results are shown in Table 1.

In this respect, the evaluation criteria in determining a grade representing the state in which the rubber was attached to the cord are shown in Table 3.

### < Method 2 for evaluating adhesion property ("dual bath treatment" cases: Examples 8 to 10) >

Adhesion property of the adhesive composition sample was evaluated by:
preparing an aqueous solution for the pretreatment, containing 1 mass % of an epoxy compound (product name "DENACOL EX614B" manufactured by Nagase ChemteX Corporation), 3 mass % of an isocyanate compound (product name "ELASTRON BN77" manufactured by DKS Co., Ltd.), and 6 mass % of "ISOBAM" manufactured by Kuraray Co., Ltd.;
subjecting a polyethylene terephthalate cord for a tire (PET, cord structure: 1670 dtex/2) to the pretreatment by using the aqueous solution thus prepared (the first bath treatment);
preparing a (green) rubber-organic fiber cord composite by treating, the thus pretreated PET cord, with the adhesive composition sample (the second bath treatment) and then embedding the PET cord in an unvulcanized rubber composition containing a rubber component including natural rubber and styrene-butadiene copolymer, carbon black, and a crosslinking agent;
vulcanizing the green rubber-organic fiber cord composite under the pressure of 20 kgf/cm² at 160 °C for 20 minutes, thereby obtaining a vulcanized rubber-organic fiber cord composite;
cooling the vulcanized rubber-organic fiber cord composite thus obtained, to the room temperature, and digging up the PET cord from the vulcanized rubber-organic fiber cord composite;
measuring resistance force or adhesiveness (N/cord) experienced in peeling the PET cord from the vulcanized rubber-organic fiber cord composite at the speed of 30 cm/minute at the room temperature (25 ± 1 °C); and
visually observing the state in which the rubber was attached to the PET cord. The results are shown in Table 1.

In this respect, the evaluation criteria in determining a grade representing the state in which the rubber was attached to the cord are shown in Table 3.

**[Table 1]**

| | Components | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Blend formulation in solution of adhesive composition (mass %) | Rubber latex (A) | A-1 | Vinylpyridine-styrene-butadiene copolymer latex | 36.9 | 38.2 | 38.3 | 38.4 | 38.5 | 37.3 | 36.9 | 37.1 | 37.1 | 37.4 |
| | Polyphenol (B) | B-1 | Phloroglucinol | 17.2 | 13.4 | 13.4 | 13.5 | 13.5 | 17.4 | 17.2 | - | - | - |
| | | B-2 | Lignin (alkaline) | - | - | - | - | - | - | - | 2.0 | - | - |
| | | B-3 | Sodium ligninsulfonate | - | - | - | - | - | - | - | - | 2.0 | - |
| | | B-4 | Tannin | - | - | - | - | - | - | - | - | - | 2.2 |
| | Formaldehyde (C) | C-1 | Formaldehyde | 18.9 | 14.6 | 14.7 | 14.7 | 14.8 | 19.0 | 18.9 | 12.9 | 12.9 | 8.8 |
| | Caustic soda (D) | D-1 | 1N Aqueous solution of NaOH | 11.3 | 11.3 | 10.1 | 9.0 | 7.9 | 6.8 | 11.3 | 4.6 | 4.6 | 4.7 |
| | Ammonia (E) | E-1 | Aqueous ammonia | - | - | - | - | - | - | - | 0.6 | 0.6 | - |
| | Water | - | - | 15.8 | 22.5 | 23.5 | 24.4 | 25.4 | 19.5 | 15.8 | 42.8 | 42.8 | 47.0 |
| Blend formulation in solid content of adhesive composition (mass %) | Rubber latex (A) | A-1 | Vinylpyridine-styrene-butadiene copolymer latex | 84.1 | 87.1 | 87.3 | 87.5 | 87.7 | 84.9 | 84.1 | 84.5 | 84.5 | 85.13 |
| | Polyphenol (B) | B-1 | Phloroglucinol | 9.6 | 7.4 | 7.5 | 7.5 | 7.5 | 9.7 | 9.6 | - | - | - |
| | | B-2 | Lignin (alkaline) | - | - | - | - | - | - | - | 11.1 | - | - |
| | | B-3 | Sodium ligninsulfonate | - | - | - | - | - | - | - | - | 11.1 | - |
| | | B-4 | Tannin | - | - | - | - | - | - | - | - | - | 12.0 |
| | Formaldehyde (C) | C-1 | Formaldehyde | 3.9 | 3.0 | 3.0 | 3.0 | 3.0 | 3.9 | 3.9 | 2.7 | 2.65 | 1.8 |
| | Caustic soda (D) | D-1 | 1N Aqueous solution of NaOH | 2.5 | 2.5 | 2.3 | 2.0 | 1.8 | 1.5 | 2.5 | 1.0 | 1.0 | 1.04 |
| | Ammonia (E) | E-1 | Aqueous ammonia | - | - | - | - | - | - | - | 0.8 | 0.8 | - |
| Fiber type of cord | | | | 66Ny | 66Ny | 66Ny | 66Ny | 66Ny | 66Ny | 66Ny | PET | PET | PET |
| Processing form of organic fiber cord | | | | Single bath | Single bath | Single bath | Single bath | Single bath | Single bath | Single bath | Dual bath | Dual bath | Dual bath |
| Solid content concentration in adhesive composition sample (mass %) | | | | 18 | 18 | 18 | 18 | 18 | 18 | 18 | 18 | 18 | 18 |
| Evaluation results | Adhesiveness (N/cord) | | | 39.6 | 31.8 | 37.2 | 38.8 | 41.0 | 41.6 | 41.2 | 17.6 | 21.0 | 19.1 |
| | State in which rubber was attached to cord | | | A | B | A-B | A-B | A | A | A | B | A-B | A-B |

**[Table 2]**

| Components of adhesive composition | | Detailed information of components and concentration (purity) thereof | Manufacturer and Product name | How was the product used? |
|---|---|---|---|---|
| Rubber latex (A) | A-1 | Vinylpyridine-styrene-butadiene copolymer latex | NIPPON A&L INC. | Used without being diluted |
| | | Solid content concentration: 41 % | PYRATEX | |
| Polyphenol (B) | B-1 | Phloroglucinol | FUJIFILM Wako Pure Chemical Corporation | 10 mass % aqueous solution thereof was used. |
| | | Purity: > 98 % | Phloroglucinol | |
| | B-2 | Lignin (alkaline) | Tokyo Chemical Industry Co., Ltd. | Used without being diluted |
| | | - | Lignin (alkaline) | |
| | B-3 | Sodium ligninsulfonate | Tokyo Chemical Industry Co., Ltd. | Used without being diluted |
| | | - | Sodium ligninsulfonate | |
| | B-4 | Tannin | Kawamura Corporation | Used without being diluted |
| | | Purity: 72 % | Mimosa | |
| Formaldehyde (C) | C-1 | Formaldehyde | KANTO CHEMICAL CO., LTD. | Used after being diluted with water to 10 times |
| | | Special grade, Purity: 37 % | Formaldehyde aqueous solution | |
| Caustic soda (D) | D-1 | 1N Aqueous solution of NaOH | KANTO CHEMICAL CO., LTD. | Used without being diluted |
| | | Standard solution for quantitative analysis, Concentration: 4.0 mass % | 1N Aqueous solution of NaOH | |
| Ammonia (E) | E-1 | Aqueous ammonia | KANTO CHEMICAL CO., LTD. | Used without being diluted |
| | | Special grade, Concentration: 30 % | Aqueous ammonia | |

**[Table 3]**

| Grade representing state in which rubber was attached to cord | Ratio of area where coating rubber remained without coming off, with respec to entire area of tire cord (organic fiber cord) | State of cord filament |
|---|---|---|
| A+ | - | Filament broke |
| A | ≥ 80 % and ≤ 100 % | Filament did not break |
| B | ≥ 60 % and < 80 % | Filament did not break |
| C | ≥ 40 % and < 60 % | Filament did not break |
| D | ≥ 20 % and < 40 % | Filament did not break |
| E | ≥ 0 % and < 20 % | Filament did not break |

| | | |
|---|---|---|
| "A-B" in Table 1 represents a mixed state which was evaluated as between "A" and "B". | | |

It is understood from Table 1 that it is possible to satisfactorily enhance 5 adhesion between an organic fiber cord and rubber by treating the organic fiber cord with the adhesive composition of the present disclosure.

### INDUSTRIAL APPLICABILITY

According to the present disclosure, it is possible to provide an adhesive composition capable of achieving excellent adhesion even when resorcin is not included 10 therein. Further, according to the present disclosure, it is possible to provide a rubber-organic fiber cord composite and a tire, which make a low impact on the environment and are excellent in adhesion between rubber and organic fiber cords.

## Claims

1. An adhesive composition, comprising therein:
a polyphenol; and
formaldehyde.

2. The adhesive composition of claim 1, wherein the polyphenol has at least three hydroxyl groups.

3. The adhesive composition of claim 1 or 2, wherein the polyphenol is at least one selected from the group consisting of phloroglucinol, morin, phloroglucide, lignin, and tannin.

4. The adhesive composition of any of claims 1 to 3, further comprising an isocyanate compound.

5. The adhesive composition of claim 4, wherein the isocyanate compound is an (blocked) isocyanate group-including aromatic compound.

6. The adhesive composition of any of claims 1 to 5, further comprising rubber latex.

7. The adhesive composition of claim 6, wherein the rubber latex includes at least one selected from the group consisting of natural rubber (NR), isoprene rubber (IR), styrene-butadiene copolymer rubber (SBR), butadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp).

8. The adhesive composition of claim 6 or 7, wherein the total content of the polyphenol and the formaldehyde is in the range of 5 to 65 mass % in terms of solid content mass ratio, the content of the latex is in the range of 30 to 95 mass % in terms of solid content mass ratio, and a content of other components is in the range of 0 to 65 mass %, respectively, in the adhesive composition.

9. The adhesive composition of any of claims 1 to 8, wherein the adhesive composition is an adhesive composition for an organic fiber cord.

10. A rubber-organic fiber cord composite, having a rubber member and an organic fiber cord, wherein:
at least a portion of the organic fiber cord is coated with the adhesive composition of any of claims 1 to 9.

11. A tire, including the rubber-organic fiber cord composite of claim 10.
